## Europäisches Patentamt
## European Patent Office
## Office européen des brevets

(19)

(11) Publication number: **0 169 014**
**A2**

# EUROPEAN PATENT APPLICATION

(21) Application number: **85304827.0**

(22) Date of filing: **05.07.85**

(51) Int. Cl.⁴: **F 16 J 1/00,** B 60 P 1/44,
F 15 B 15/00

(30) Priority: **18.07.84 GB 8418305**

(43) Date of publication of application: **22.01.86**
**Bulletin 86/4**

(84) Designated Contracting States: **DE FR GB NL**

(71) Applicant: **P.C. HENDERSON GROUP LTD., Tangent Works Harold Hill, Romford Essex RM3 8UL (GB)**

(72) Inventor: **Marshall, Michael Albert Sidney, Eskdale 2 Janmead Hutton, Brentwood Essex (GB)**

(74) Representative: **Rooney, Paul Blaise et al, D.Young & Co. 10 Staple Inn, London WC1V 7RD (GB)**

(54) **Piston and cylinder assembly and vehicle cantilever tail lift including such an assembly.**

(57) A piston and cylinder assembly is provided having an elongate rod-like piston (1) slidably housed in a bore (2) in a cylinder (3) to project from an open end (4) of the cylinder bore (2) and a gland assembly (5) for sealing between the cylinder bore (2) and the outer surface (6) of the piston (1). The gland assembly (5) includes a through bored housing member (7) secured at one open end (7a) to the cylinder at its open end (4) to extend around the piston (1) with the respective bores (2, 70) extending coaxially and opening into one another and with the housing member bore (7b) being larger in diameter than the cylinder bore (2) and piston (1) to define an annular chamber (8) around the outer surface of the piston (1), which chamber (8) is bounded at its innermost end, immediately adjacent the cylinder bore end (4), by a first end wall (9) extending generally transversely to the longitudinal axes of the housing member and cylinder bores (7b, 2) and at its outermost end by a second end wall (11) extending generally transversely to the longitudinal axes of the housing member and cylinder bores (7b, 2) and provided on an annular end closure means (12) removably attachable to the housing member (7) at the other open end of the housing member (7). A flexible annular guide ring (14), split peripherally in the direction of its longitudinal axis, is provided locatable in the chamber (8) around and in sliding guide contact with the piston outer surface (6) adjacent the first end wall (9), and a flexible annular seal ring (16) locatable in the chamber (8) around and in sliding sealing contact with the piston outer surface (6) between the guide ring (14) and the second end wall (11). The arrangement is such that the seal and guide rings (16, 14) may be entered into and removed from the chamber (8) by means of the removable end closure means (12) and in operation of the piston and cylinder assembly, with pressure fluid operatively present in the cylinder bore, the seal ring (16) is urged into sealing contact with the piston outer surface (6) by being compressed between the second end wall (11) and fluid pressure acting on an innermost end face of the seal ring (16) through the peripheral split in the guide ring (14).

## PISTON AND CYLINDER ASSEMBLY AND
## VEHICLE CANTILEVER TAIL LIFT INCLUDING SUCH AN ASSEMBLY

This invention relates to a piston and cylinder assembly particularly, but not exclusively, suitable for use in a vehicle cantilever tail lift and to a vehicle cantilever tail lift including one or more such assemblies.

Conventional piston and cylinder assemblies having an elongated rod-like piston slidably housed in a bore in a cylinder to project from an open end of the cylinder bore usually have a gland assembly for sealing between the piston outer surface and the cylinder bore. Such a conventional gland assembly is in the form of an annular cylindrical housing member screw threadably fitted over the cylinder open end and piston in axial extension of the cylinder bore. An annular recess is provided in the housing member bore into which is forced an annular seal ring which is thereby urged into contact with the piston outer surface by virtue of the particular dimensions of the recess, ring and piston outer surface. A guide ring for the piston may also be provided in a similar way in a first annular recess in the housing member bore.

Such a form of conventional gland assembly is inefficient, difficult to assemble, prone to cause damage to the seal and guide rings on fitting, results in high wear of the rings and requires removal of the piston from the gland assembly for removal and refitting of the rings. It is thus relatively expensive to manufacture and utilize.

Partly by reason of this, vehicle cantilever tail lifts having a platform-like tail gate pivotally mounted for movement between a horizontal raised position in extension of the vehicle load carrying floor at the rear thereof, a substantially horizontal lowered position in contact with the ground and a substantially vertical raised position in which it closes at least partially the rear opening to the vehicle load carrying area, have employed to pivot the tail gate platform between the horizontal raised and substantially vertical raised positions, conventional double acting piston and cylinder assemblies in which the cylinder is pivotally attached at one end to the vehicle and an axially short large diameter piston sliding in a honed bore in the cylinder is connected via a reduced diameter piston rod to the platform. The piston carries conventional seal rings therearound and the piston rod extends from the cylinder bore via a conventional gland assembly.

Such a conventional large diameter piston and cylinder assembly is expensive to manufacture, difficult reliably to seal, and has a relatively weak small diameter piston rod. It is customary to make the rod longer by securing to its outermost end a larger diameter connecting rod which can be screw threadably adjusted in length relative to the piston rod to alter the throw of the piston and the total length of the assembly. To achieve this adjustment it is of course necessary to rotate the connecting rod which is difficult to do, due to the resistance of the seal rings. To protect the extending piston rod it is necessary to employ a flexible concertina gaiter around the gland assembly and a piston end to prevent ingress of dirt. Such a gaiter is relatively easily damaged with consequent increased risk of damage to the assembly. Moreover this gaiter has to be removed before adjustment of the connecting and piston rods can take place.

Additionally such conventional vehicle cantilever tail lifts use double acting piston and cylinder assemblies for displacing the tail gate platform between the raised and lowered horizontal positions, having the cylinder pivotally connected to the vehicle and an elongated rod-like piston connected to the platform. However such conventional elongated piston and cylinder assemblies whilst generally being simple and cheaper to manufacture than the large diameter piston and cylinder assemblies, also use the conventional above described gland assembly and consequently suffer from the drawbacks associated therewith. Moreover such conventional elongated piston and cylinder assemblies have a solid piston which cannot be adjusted in throw.

There is thus a need for a generally improved piston and cylinder assembly suitable for use in a vehicle cantilever tail lift.

According to one aspect of the present invention there is provided a piston and cylinder assembly having an elongated rod-like piston slidably housed in a bore in a cylinder to project from an open end of the cylinder bore and a gland assembly for sealing between the cylinder bore and the outer surface of the piston, characterised in that the gland assembly includes a through bored housing member secured at one open end to the cylinder at its open end to extend around the piston with the respective bores extending coaxially and opening into one another and with the housing member bore being larger in diameter than the cylinder bore and piston to define an annular chamber around the outer surface of the piston, which chamber is bounded at its innermost end, immediately adjacent the cylinder bore end, by a first end wall extending generally transversely to the longitudinal axes of the housing member and cylinder bores and at its outermost end by a second end wall extending generally transversely to the longitudinal axes of the housing member and cylinder bores and provided on an annular end closure means removably attachable to the housing member at the other open end of the housing member, a flexible annular guide ring, split peripherally in the direction of its longitudinal axis, locatable in the chamber around and in sliding guide contact with the piston outer surface adjacent the first end wall, and a flexible annular seal ring locatable in the chamber around and in sliding sealing contact with the piston outer surface between the guide ring and the second end wall, the arrangement being such that the seal and guide rings may be entered into and removed from the chamber by means of the removable end closure means and in operation of the piston and cylinder assembly, with pressure fluid operatively present in the cylinder bore, the seal ring is urged into sealing contact with the piston outer surface by being compressed between the second end wall and fluid pressure acting on an innermost end face of the seal ring through the peripheral split in the guide ring.

Preferably the removable end closure means is a through bored sleeve fitting over the piston and screw threadably engageable adjacent its innermost end with a corresponding screw thread provided on the housing member, so that its innermost end forms the second end wall.

Conveniently the sleeve is recessed at the outermost end of its through bore to house a flexible annular wiper ring in slidable contact with the outer surface of the piston.

Advantageously the end of the cylinder bore remote from the gland assembly is closed, the fluid pressure being provided by hydraulic fluid introducable into the cylinder bore and acting between the closed end of the cylinder and an adjacent end face of the piston to extend the latter from the cylinder.

Conveniently the hydraulic pressure fluid is introduced into the cylinder bore via a feed bore opening through the piston from one end to the other in the direction of the longitudinal axis of the piston.

Preferably the piston and cylinder assembly is in the form of a double acting assembly having a reduced diameter extension rod fixedly attached at its innermost end to the outermost end of the piston with a feed bore being provided through the extension rod in communication at the innermost end of the extension rod with the feed bore in the piston and communicating adjacent the outermost end of the extension rod with a transverse feed bore opening through the outer surface of the extension rod for connection to a source of hydraulic fluid under pressure.

Advantageously the piston and cylinder assembly includes a substantially rigid sleeve-like gaiter, preferably made of metal, screw threadably attached at one end to the outer surface of the housing member to project therefrom around the extension rod towards the outermost end thereof, the other end of the gaiter having stop means projecting inwardly towards the extension rod for cooperation with spring means housed in the gaiter between the stop means and a stop ring fixedly located around the extension rod at its innermost end adjoining the outermost end of the piston, so that extension of the piston and extension rod from the cylinder under the action of hydraulic fluid under pressure compresses the spring means between the stop means and stop ring causing the spring means to expand and thereby return the piston and extension rod into the cylinder on removal of hydraulic pressure in the cylinder bore.

Preferably the gaiter is screw threadably adjustably attached to a corresponding screw thread on the outer surface of the housing member, for screw threadable adjustment to vary the distance of the gaiter stop means from the housing member and hence vary the piston return force exerted by the spring means between the stop means and stop ring and vary the throw distance of the piston from the cylinder.

Conveniently the piston and cylinder assembly includes a flexible annular seal member mounted on the extension rod adjacent the stop ring, the stop means and seal member being dimensioned to interfit or otherwise cooperate in the extended position of the extension rod and piston to prevent ingress of dirt into the gaiter.

According to another aspect of the invention there is provided a cantilever tail lift for a vehicle having a platform-like tail gate pivotally mountable for movement between a horizontal raised position in extension of the vehicle load carrying floor, a substantially horizontal and/or slightly tilted lower position in contact with the ground and a substantially vertical raised position in which it closes at least partially the opening to the vehicle load carrying area, and including one or more piston and cylinder assemblies according to the invention.

Advantageously, the tail lift includes a pair of piston and cylinder assemblies according to the invention operable to pivot the tail gate platform between the substantially vertical raised closed position and the horizontal raised position, the outermost end of the extension rod and the closed end of the cylinder being provided with pivot eyes, of which the extension rod pivot eye is pivotally attachable to the vehicle and the cylinder pivot eye is pivotally attachable to the tail gate platform, the tail gate platform being held in the closed position by hydraulic fluid pressure maintaining the piston and extension rod extended from the cylinder for pivoting into the horizontal raised position under the action of the spring means and the gravity on removal of the hydraulic pressure in the cylinder.

Additionally, the tail lift includes a further pair of piston and cylinder assemblies according to the invention, operable to raise and lower the tail gate platform between the horizontal raised and substantially horizontal lowered positions, the outer most end of the extension rod and the closed end of the cylinder being provided with pivot eyes, of which the cylinder pivot eye is pivotally attachable to the vehicle and the extension rod eye is pivotally attachable to a link pivotally attachable at one end to the vehicle and providing a pivot for the tail gate platform at the other end, the tail gate platform being held in and raised to the horizontal raised position by extension of the extension rod and piston from the cylinder under the action of hydraulic fluid pressure in the cylinder and lowered into the substantially horizontal lowered position by gravity on removal of hydraulic pressure in the cylinder.

The invention also contemplates the provision of a vehicle having a cantilever tail lift according to the invention.

For a better understanding of the present invention, and to show how the same may be carried into effect, reference will now be made, by way of example, to the accompanying drawings, in which:-

Figure 1 is a diagrammatic longitudinal sectional view through part of a piston and cylinder assembly according to one embodiment of the invention showing a gland assembly as used in the invention,

Figure 2 is a longitudinal part-sectional view through a piston and cylinder assembly according to a further embodiment of the invention, and

Figure 3 is a diagrammatic view showing a vehicle cantilever tail lift employing piston and cylinder assemblies of the invention, in operative location on a vehicle.

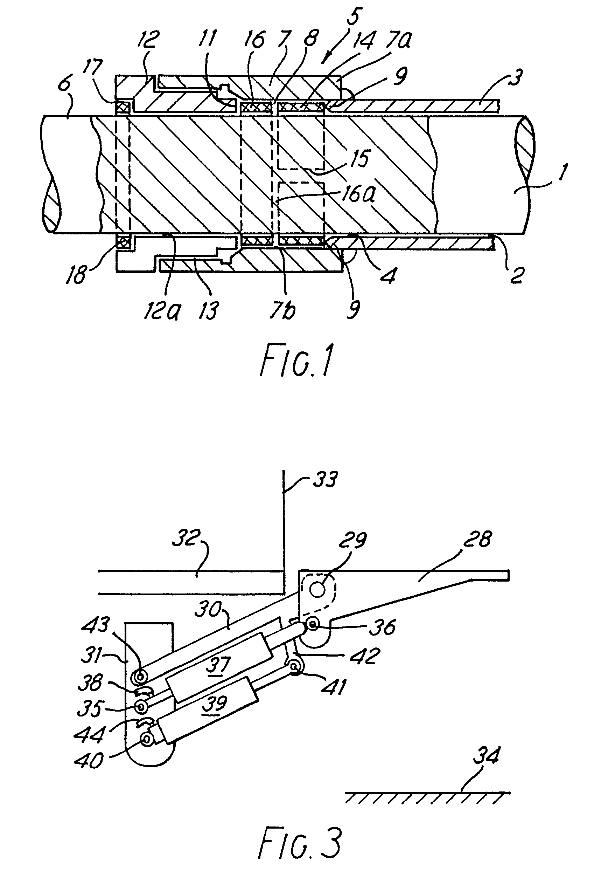

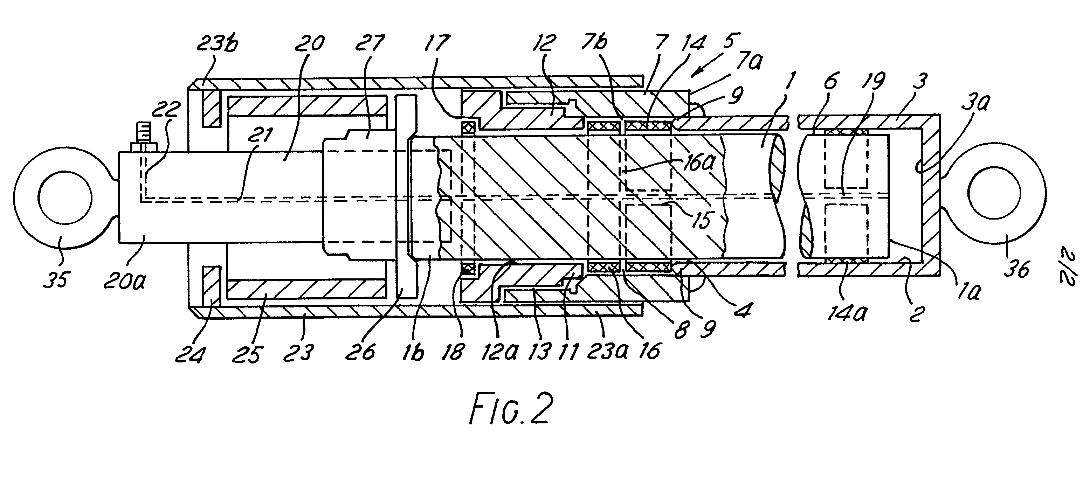

As shown in the accompanying drawings, particularly in Figures 1 and 2 thereof, a piston and cylinder assembly of the invention includes an elongated rod-like piston 1 slidably housed in a bore 2 in a cylinder 3 to project from an open end 4 of the cylinder bore 2 and a gland assembly generally indicated at 5 for sealing between the cylinder bore 2 and the outer surface 6 of the piston 1. The gland assembly 5 includes a through bored housing member 7 secured at one open end 7a to the cylinder at its open end 4, in any convenient manner such as by welding as illustrated in Figures 1 and 2, to extend around the piston 1 with the bore 2 and the housing member through bore 7b extending coaxially and opening into one another. The housing member bore 7b is larger in diameter than the cylinder bore 2 and piston 1 to define an annular chamber 8 around the outer surface 6 of the piston.

This chamber 8 is bounded at its innermost end, immediately adjacent the cylinder bore end 4, by a first end wall 9 conveniently provided at least partially by the end of the cylinder 3 as indicated in the embodiments of Figures 1 and 2. This first end wall 9 extends generally transversely to the longitudinal axes of the housing member and cylinder bores 7b and 2.

Additionally the chamber 8 is bounded at its outermost end by a second end wall 11 provided by a removable end closure means in the form of a sleeve 12 which has a through bore 12a and fits loosely over the piston 1. This closure means sleeve 12 is screw threadably engageable its innermost end with a corresponding screw thread 13 provided on the housing member so that the innermost end of the sleeve 12 provides the second end wall 11 which extends generally transversely to the longiudinal axes of the housing member and cylinder bores 7b and 2. Thus the bores 12a and 2 have substantially the same diameter which is less than that of the diameter of the chamber 8. Conveniently as illustrated the annular end closure member sleeve 12 is provided with a reduced diameter portion which is screw threadably engageable with the screw thread 13 provided internally in an enlarged diameter portion of the through bore in the housing member 7.

The gland assembly 5 also includes a flexible annular guide ring 14 made of any convenient material such as plastics material. The guide ring 14 is split peripherally at 15 in the direction of its longitudinal axis and is locatable in the chamber 8 around and in sliding guide contact with the piston outer surface 6 adjacent the first end wall 9. The gland assembly 5 also includes a flexible annular seal ring 16 made of any convenient material such as plastics or rubber, and located in the chamber 8 around and in sliding sealing contact with the piston outer surface 6 between the guide ring 14 and the second end wall 11. Additionally the piston 1 is guided in the bore 2 by a flexible annular guide ring 14a.

This form of construction of the gland assembly 5 means that the seal and guide rings 16 and 14 may be entered into and removed from the chamber 8 by means of the removable end closure sleeve 12. Thus to change the rings 14 and 16 it is merely necessary to unscrew the sleeve 12 from the screw thread 13 in the housing member 7 and withdraw it and the rings over the piston outer surface 6 without it being necessary first to remove the piston 1 completely from the housing member 7. With this form of gland assembly construction the rings 14 and 16 may be a sliding fit in the chamber 8 with consequent reduction of wear and ease of insertion and removal. In operation of the piston and cylinder assembly having the gland assembly 5 fluid pressure in the bore 2, conveniently supplied by hydraulic fluid under pressure passes along the bore 2 between the cylinder 3 and outer surface 6 of the piston 1, through the guide ring 14 via the peripheral split 15 therein and acts on an innermost end face 16a of the seal ring 16 to compress the latter against the second end wall 11 and thereby urge the seal ring 16 into sealing contact with the piston outer surface 6. By appropriate choice of the dimensions of the chamber 8 and axial separation of the end walls 9 and 11 it is possible additionally to provide for a degree of compression of both rings 14 and 16 between the end walls so that the guide ring 14 provides a degree of back up support for the seal ring 16. Additionally the construction of such a gland assembly from any convenient materials and utilized in conjunction with a simple tubular cylinder 3 reduces the cost of manufacture of such an assembly. Advantageously the piston 1 is made from steel provided with a hard chrome outer surface coating for wear resistance. The presence of the peripheral split 15 in the guide ring 14 enhances the ease with which the guide ring can be fitted into the chamber 8. Moreover the sealing pressure exerted by the ring 14 on the piston 1 is reduced in the absence of reduction of fluid pressure in the bore 3 so as to reduce the friction between the seal ring 14 and piston 1 on the return stroke of the piston 1 into the cylinder 3.

The end closure sleeve 12 additionally is recessed at 17 in the outermost end of its through bore 12a to house a flexible annular wiper ring 18 in slidable contact with the outer surface 6 of the piston 1 to enhance sealing therebetween and prevent ingress of dirt to the gland assembly.

The hydraulic fluid is introducable into the cylinder bore 2 in any convenient manner in the embodiment of Figure 1 and acts between the closed end of the cylinder 3 (not shown) and an adjacent end face of the piston (not shown) to extend the piston cylinder 3. In the embodiment illustrated in Figure 2 the closed end 3a of the cylinder is illustrated together with the adjacent end face 1a of the piston 1. In the embodiment of Figure 2 the hydraulic fluid is introduced into the bore 2 via a feed bore 19 opening through the piston 1 from one end to the other in the direction of the longitudinal axis of the piston 1.

As shown in Figure 2 the piston and cylinder assembly of this embodiment of the invention is in the form of a double acting assembly having a reduced diameter extension rod 20 fixedly attached at its innermost end to the outermost end 1b of the piston, for example by being screw threadably engaged therein or welded thereto. A feed bore 21 is provided through the extension rod 20 in communication at the innermost end of the rod 20 with the feed bore 19 in the piston 1. This feed bore 21 communicates at its other end adjacent the outermost end 20a with a transverse feed bore 22 opening through the outer surface of the extension rod 20 for connection to a source of hydraulic fluid under pressure. A substantially rigid sleeve like gaiter 23 conveniently in the form of a metal sleeve like tube is screw threadably attached at one end 23a to the outer surface of the housing member 7 to project therefrom around the gland assembly 5, piston 1 and extension rod 20 towards the outermost end 20a thereof. The other end 23b of the gaiter 23 has stop means 24 projecting inwardly towards the rod 20 for cooperation with spring means 25, conveniently in the form of a compression coil spring or an annular tube of flexible elastic material, housed in the gaiter 23 between the stop means 24 and a stop ring 26 fixedly located around the extension rod 20 at its innermost end adjoining the outermost end 1b of the piston 1. In operation of this assembly extension of the piston 1 and extension rod 20 from the cylinder 3 under the action of hydraulic fluid under pressure acting between the closed end 3a of the cylinder 3 and the end face 1a of the piston 1 compresses the spring means 25 between the stop means 24 and the stop ring 26. On removal or reduction of hydraulic pressure in the cylinder bore 2 the compressed spring means 25 expands and thereby returns the piston 1 and rod 20 into the cylinder 3. The gaiter 23 is screw threadably adjustably attached at its end 23a to a corresponding screw thread on the outer surface of the housing member 7, for screw threadable adjustment to vary the distance of the gaiter stop means 24 from the housing member 7 and so vary the throw distance of the piston 1 from the cylinder 3. Such an adjustment can be relatively easily made to the piston and cylinder assembly by simple rotation of the gaiter 23 about the housing member 7 and does not require any dismantling of the assembly.

As shown in Figure 2 the piston and cylinder assembly of the second embodiment includes a flexible annular seal member 27 conveniently made of rubber or plastics material mounted on the rod 20 in any convenient manner adjacent the stop ring 26 and locating the latter fixedly on the rod 20 against the end 1b of the piston 1. The stop means 24 and seal member 27 are dimensioned to interfit in the extended position of the rod 20 and piston 1 to prevent ingress of dirt into the gaiter and hence into the assembly. Thus the rigid gaiter 23 and cooperating stop means 24 and seal member 27 provide a particularly effective protection for the gland assembly 5 and piston 1 of the piston and cylinder assembly.

The invention also contemplates a cantilever tail lift for a vehicle including one or more piston and cylinder assemblies, as shown in Figure 2. Such a vehicle cantilever tail lift is shown diagrammatically in Figure 3 in the accompanying drawings and has a platform-like tail gate 28 pivotally mounted on a pivot 29 at one end of a link 30 with the other end of the link 30 being pivotally mounted on a support member 31 attached to or forming part of the vehicle chassis (not shown) under a rear portion of the vehicle load carrying floor 32 in the vicinity of the opening 33 to the load carrying floor area. Conveniently, as illustrated, the tail lift is fitted beneath the rear opening of the vehicle but may, alternatively, also not illustrated, be located at a side aperture in the vehicle body.

The tail gate platform 28 is pivotally movable between a horizontal raised position as shown in Figure 3 in extension of the vehicle load carrying floor 32, a substantially horizontal and/or slightly tilted lowerered position in contact with the ground 34 and a substantially vertical raised position in which it closes at least partially the opening 33 to the load carrying area.

Such a vehicle cantilever tail lift includes a pair of piston and cylinder assemblies according to the Figure 2 embodiment operable to pivot the tail gate platform 28 between the substantially vertical raised closed position and the horizontal raised position. To this end the outermost end 20a of the extension rod fixedly carries a pivot eye 35 and the closed end 3a of the cylinder 3 fixedly carries a pivot eye 36. The pivot eye 35 is pivotally attached to the vehicle for example to the support member 31 and the pivot eye 36 is pivotally attached to the tail gate platform 28 as shown in Figure 3 so that the piston and cylinder assemblies 37 form closing cylinders. One such piston and cylinder assembly 37 is mounted at each end of the tail gate platform 28 on opposite sides of the vehicle and are operable so that the tail gate platform is held in the closed position covering the opening 33 by hydraulic fluid pressure in the bore 2 maintaining the piston 1 and extension rod 20 extended from the cylinder 3 and is pivotable into the horizonal raised position under the return action of the spring means and gravity on removal or reduction of the hydraulic pressure in the bore 2 of the cylinder 3. The hydraulic fluid under pressure is fed to the transverse feed bore 22 via a flexible pipe 38 conveniently attachable via the support member 31 to a hydraulic pump (not illustrated). With such construction of vehicle cantilever tail lift the piston and cylinder assembly 37 of the invention provides a robust closing cylinder which is easily adjustable in length, i.e. piston throw if necessary, effectively shielded against dirt and damage by the rigid gaiter 23 and simply fed with hydraulic fluid at a position on the support member 31 which is relatively easily protected and which is not subjected to a great deal of movement.

Additionally as shown in Figure 3 the vehicle cantilever tail lift can include a further pair of piston and cylinder assemblies according to the Figure 2 embodiment which act as lifting cylinders 39. These lifting cylinder piston and cylinder assemblies 39 are located one at each side of the vehicle and also are provided with a pivot eye 40 fixedly attached to the closed end 3a of the cylinder 3 and a pivot eye 41 fixedly attached to the outermost end 20a of the rod 20 in equivalent manner to the pivot eyes 35 and 36. The pivot eye 40 is pivotally attached to the vehicle, conveniently to the support member 31, and the pivot eye 41 is pivotally attached to an arm 42 of the link 30 located adjacent the pivotal connection 29 to the tail gate platform 28. The other end 43 of the link 30 is pivotally attached to the vehicle, such as to the support member 31 as illustrated. Thus the link 30 provides a pivotal mount securing the vehicle tail gate platform pivot 29 pivotally to the vehicle. The tail gate platform 28 is held in and raised to the horizontal raised position by extension of the rod 20 and piston 1 from the cylinder 3 under the action of hydraulic fluid pressure in the cylinder bore 2 and is lowered into the substantially horizontal lowered position by gravity on removal or reduction of the hydraulic pressure in the cylinder bore 2. The spring means 25 can be omitted from the lifting piston and cylinder assemblies 39. Hydraulic fluid under pressure is supplied to the cylinder bore 2 of the assembly 39 via feed bores in to the cylinder 3 and a flexible pipe 44 also conveniently attached to a hydraulic pump (not shown). As illustrated the pivotal connection of the pivot eye 36 to the tail gate platform 28 is spaced from the pivotal connection 29 of the platform 28 to the link 30 to afford the pivotal action of the platform 28 about the pivotal connection 29 on extension of the piston 1 of the piston and cylinder assemblies 37.

The use of piston and cylinder assemblies of the invention for both the lifting cylinders 39 and the closing cylinders 37 enables the advantages of the piston and cylinder assembly construction of the invention to be utilized readily to reduce manufacturing costs, extend working life and provide a better protected tail lift. Additionally the piston throw in the cylinders is easily adjustable externally by means of rotating the gaiter 23 without first dismantling the assembly.

To assist in assembly of the piston and cylinder assembly the stop ring 26 can not only be axially bored to accommodate the extension rod 20 but it can, if necessary, be provided with radial slots opening from the bores axially through the stop rings 26 so that it may be slipped over the pivot eye 35 or 40 if necessary. Of course after refitting over the eye 35 or 40 and onto the rod 20 the stop ring 26 can then be rotated so that the radial slots are no longer in alignment with the pivot eye for security reasons.

Additionally all four piston and cylinder assemblies 37 and 39 can use the same bearing and sealing components with consequent reduction in cost.

## CLAIMS

1.    A piston and cylinder assembly having an elongated rod-like piston (1) slidably housed in a bore (2) in a cylinder (3) to project from an open end (4) of the cylinder bore (2) and a gland assembly (5) for sealing between the cylinder bore (2) and the outer surface (6) of the piston (1), characterised in that the gland assembly (5) includes a through bored housing member (7) secured at one open end (7a) to the cylinder at its open end (4) to extend around the piston (1) with the respective bores (2,7b) extending coaxially and opening into one another and with the housing member bore (7b) being larger in diameter than the cylinder bore (2) and piston (1) to define an annular chamber (8) around the outer surface of the piston (1), which chamber (8) is bounded at its innermost end, immediately adjacent the cylinder bore end (4), by a first end wall (9) extending generally transversely to the longitudinal axes of the housing member and cylinder bores (7b,2) and at its outermost end by a second end wall (11) extending generally transversely to the longitudinal axes of the housing member and cylinder bores (7b,2) and provided on an annular end closure means (12) removably attachable to the housing member (7) at the other open end of the housing member (7), a flexible annular guide ring (14), split peripherally in the direction of its longitudinal axis, locatable in the chamber (8) around and in sliding guide contact with the piston outer surface (6) adjacent the first end wall (9), and a flexible annular seal ring (16) locatable in the chamber (8) around and in sliding sealing contact with the piston outer surface (6) between the guide ring (14) and the second end wall (11), the arrangement being such that the seal and guide rings (16,14) may be entered into and removed from the chamber (8) by means of the removable end closure means (12) and in operation of the piston and cylinder assembly, with pressure fluid operatively present in the cylinder bore, the seal ring (16) is urged into sealing contact with the piston outer surface (6) by being compressed between the second end wall (11) and fluid pressure acting on an innermost end face of the seal ring (16) through the peripheral split in the guide ring (14).

2.    An assembly according to claim 1, wherein the removable end closure means is a through bored sleeve (12) fitting over the piston (1) and screw threadably engageable adjacent its innermost end with a corresponding screw thread (13) provided on the housing member (7), so that its innermost end forms the second end wall (11).

3. An assembly according to claim 2, wherein the sleeve (12) is recessed at the outermost end of its through bore (12a) to house a flexible annular wiper ring (18) in slidable contact with the outer surface (6) of the piston (1).

4. An assembly according to claim 1 or claim 2, wherein the end of the cylinder bore (2) remote from the gland assembly (5) is closed, the fluid pressure being provided by hydraulic fluid introducable into the cylinder bore (2) and acting between the closed end (3a) of the cylinder (3) and an adjacent end face (1a) of the piston (1) to extend the latter from the cylinder (3).

5. An assembly according to claim 4, wherein the hydraulic pressure fluid is introduced into the cylinder bore (2) via a feed bore (19) opening through the piston (1) from one end to the other in the direction of the longitudinal axis of the piston (1).

6. An assembly according to claim 5, wherein the piston and cylinder assembly is in the form of a double acting assembly having a reduced diameter extension rod (20) fixedly attached at its innermost end to the ouertmost end (16) of the piston with a feed bore (21) being provided through the extension rod (20) in communication at the innermost end of the extension rod (20) with the feed bore (19) in the piston (1) and communicating adjacent the outermost end (20a) of the extension rod with a transverse feed bore (22) opening through the outer surface of the extension rod (20) for connection to a source of hydraulic fluid under pressure.

7. An assembly according to claim 6, wherein the piston and cylinder assembly includes a substantially rigid sleeve-like gaiter (23), preferably made of metal, screw threadably attached at one end (23a) to the outer surface of the housing member (7) to project therefrom around the extension rod (20) towards the outermost end (20a) thereof, the other end (23b) of the gaiter having stop means (24) projecting inwardly towards the extension rod (20) for cooperation with spring means (25) housed in the gaiter (23) between the stop means (24) and a stop ring (26) fixedly located around the extension rod (20) at its innermost end adjoining the outermost end (16) of the piston (1), so that extension of the piston (1) and extension rod (20) from the cylinder (3) under the action of hydraulic fluid under pressure compresses the spring means (25) between the stop means (24) and stop ring (26) causing the spring means (25) to expand and thereby return the piston (1) and extension rod (20) into the cylinder on removal of hydraulic pressure in the cylinder bore (2).

8.     An assembly according to claim 7, wherein the gaiter (23) is screw threadably adjustably attached to a corresponding screw thread on the outer surface of the housing member (7), for screw threadable adjustment to vary the distance of the gaiter stop means (24) from the housing member (7) and hence vary the piston return force exerted by the spring means (25) between the stop means (24) and stop ring (26) and vary the throw distance of the piston (1) from the cylinder (3).

9.     An assembly according to claim 8, wherein the piston and cylinder assembly includes a flexible annular seal member (27) mounted on the extension rod (20) adjacent the stop ring (26), the stop means (24) and seal member (27) being dimensioned to interfit or otherwise cooperate in the extended position of the extension rod (20) and piston (1) to prevent ingress of dirt into the gaiter (23).

10.     A cantilever tail lift for a vehicle having a platform-like tail gate (28) pivotally mountable for movement between a horizontal raised position in extension of the vehicle load carrying floor, a substantially horizontal and/or slightly tilted lower position in contact with the ground and a substantially vertical raised position in which it closes at least partially the opening to the vehicle load carrying area, and including one or more piston and cylinder assemblies according to any one of claims 1 to 9.

11.     A tail lift according to claim 10, which includes a pair of piston and cylinder assemblies (37) according to any one of claims 1 to 9, operable to pivot the tail gate platform (28) between the substantially vertical raised closed position and the horizontal raised position, the outer most end of the extension rod (20a) and the closed end (3a) of the cylinder (3) being provided with pivot eyes (35,36), of which the extension rod pivot eye (35) is pivotally attachable to the vehicle and the cylinder pivot eye (36) is pivotally attachable to the tail gate platform (28), the tail gate platform (28) being held in the closed position by hydraulic fluid pressure maintaining the piston (1) and extension rod (20) extended from the cylinder (3) for pivoting into the horizontal raised position under the action of the spring means (25) and the gravity on removal of the hydraulic pressure in the cylinder (3).

12. A tail lift according to claim 11 which includes a further pair of piston and cylinder assemblies (39) according to any one of claims 1 to 9, operable to raise and lower the tail gate platform (28) between the horizontal raised and substantially horizontal lowered positions, the outermost end of the extension rod and the closed end of the cylinder being provided with pivot eyes (40,41), of which the cylinder pivot eye (40) is pivotally attachable to the vehicle and the extension rod eye (41) is pivotally attachable to a link (30) pivotally attachable at one end (43) to the vehicle and providing a pivot for the tail gate platform at the other end, the tail gate platform (28), being held in and raised to the horizontal raised position by extension of the extension rod (20) and piston (1) from the cylinder (3) under the action of hydraulic fluid presssure in the cylinder (3) and lowered into the substantially horizontal lowered position by gravity on removal of hydraulic pressure in the cylinder (3).

13. A vehicle having a cantilever tail lift according to any one of claims 10 to 12.

FIG.1

FIG.3

FIG. 2

2/2

0169014